# EUROPEAN PATENT SPECIFICATION

(11) **EP 4 371 417 B1**
(45) Date of publication and mention of the grant of the patent: **16.09.2026**
(21) Application number: 23210245.9
(22) Date of filing: 16.11.2023
(51) Int. Cl.: A23L 7/126, A23L 33/125, A23L 33/00, A23G 3/42

(54) **HIGH CARBOHYDRATE BAR AND ITS USE DURING SPORTS ACTIVITY**
KOHLENHYDRATREICHER RIEGEL UND SEINE VERWENDUNG BEI SPORTLICHER BETÄTIGUNG
BARRE RICHE EN GLUCIDES ET SON UTILISATION PENDANT L'ACTIVITÉ SPORTIVE

(30) Priority: 17.11.2022 IT 202200023754
(43) Date of publication of application: 22.05.2024
(73) Proprietor: Enervit S.p.A., 20149 Milano (IT)
(72) Inventor: PETRONI, Paolo, 20833 GIUSSANO (IT); LOCATELLI, Giulia, 22036 Erba (IT)
(74) Representative: Cattaneo, Elisabetta

(56) References cited:
- EP-A1- 2 098 126
- CN-C- 100 548 156
- US-A1- 2014 093 609
- FISHER S: "Free Powerbar blasts sample", INTERNET CITATION, 2 February 2010 (2010-02-02), pages 1 - 3, XP002601486, Retrieved from the Internet <URL:http://freebies.about.com/b/2010/02/21/free-powerbar-gel-blasts-sample.htm> [retrieved on 20100920]
- ERIC WILLIAMSON: "Nutritional implications for ultra-endurance walking and running events", EXTREME PHYSIOLOGY & MEDICINE, BIOMED CENTRAL LTD, LONDON, UK, vol. 5, no. 1, 21 November 2016 (2016-11-21), pages 1 - 18, XP021269264, DOI: 10.1186/S13728-016-0054-0

## Description

### FIELD OF THE INVENTION

The present invention refers to the field of food science, nutritional products and supplements. In particular, of carbohydrate-based energy foods specially designed for intake during sports activity.

### STATE OF THE ART

In the context of studies on the carbohydrate-based diet for professional sports people, an obvious benefit has emerged for the athletes who manage to take an adequate amount of carbohydrates per hourly unit.

For prolonged high-intensity sports, a nutritional strategy in which the carbohydrate intake is in the order of 90-120 g/h is advantageous.

60 g of carbohydrates per hour being exceeded, the post hydrolysis glucose:fructose ratios must be 2:1, in order for the carbohydrates to be properly absorbed by the body.

Since the dawn of the study on sports nutrition (early twentieth century), a correlation has been found between the intake of simple carbohydrates during intense sports practice and exercise performance. Carbohydrates, in fact, act as an oxidizable substrate to provide energy for muscle contraction and for the central nervous system.

To make adequate doses of carbohydrates available to athletes and sports people during performance, various strategies (intake before exercise to replenish muscle and liver glycogen concentrations, and intake during exercise to maintain the blood glucose levels) and products (energy drinks, gels, bars, etc.) have been studied and developed.

These strategies and these products should be designed to allow to the athletes to build a nutritional plan that more or less responds to this scheme:
- for activities lasting around 2 hours, the intake of amounts of carbohydrates up to 60 g carbohydrates/hour is recommended;
- in case of particularly intense and long physical exertions (above 2.5-3 hours) the intake can reach up to 90 g of carbohydrates/hour and even exceed them, whether they are trainings or competitions.

Based on these well-established scientific bases, the European Food Safety Authority (EFSA) has recently proposed a health claim concerning the carbohydrate intake during physical exercise (EFSA, 2018), a claim that was approved by the European Parliament within the annex of Regulation 432/2012. The committee concluded that there is a cause-and-effect relationship between the consumption of carbohydrate solutions and the improvement of the physical performance during high-intensity, long-duration exercise. The proposed claim is as follows: "Carbohydrate solutions contribute to the improvement of physical performance during intense and prolonged exercise in trained adults", with the condition of use that to achieve the boasted effect, the carbohydrate solutions (containing glucose, fructose, sucrose and/or maltodextrins) must provide between 30 and 90 g of carbohydrates/hour, under the following conditions: no more than 1/3 of the total carbohydrates must derive from fructose and no more than 60 g/h of carbohydrates must derive from glucose.

Because precisely these carbohydrate values and the foresight of the 2:1 ratio, the issue is physiological and related to intestinal assimilation.

The carbohydrates taken with the diet are hydrolysed into their monomers and absorbed at the intestine level by means of transport processes mediated by carrier proteins, which are found in the intestinal epithelial cells. The absorption process involves the passage of the nutrients from the intestinal lumen into the bloodstream by crossing two membranes, the luminal membrane and the contraluminal membrane of the intestinal epithelial cells. Different carrier proteins for the absorption of the monosaccharides glucose and fructose are expressed on the luminal membrane of the epithelial cells. The transport protein for the glucose is called sodium-dependent glucose transporter (SGLT1), while the specific protein for the fructose is called GLUT5. Once the monosaccharides have entered at the level of the epithelial cells, a transport protein on the countraluminal membrane (GLUT2) then allows the transfer of the monosaccharides into the bloodstream.

Several studies have suggested that at the same time as the intake of high amounts of carbohydrates from a single source (e.g. glucose, fructose or maltodextrins), the specific transport protein that promotes assimilation of that specific carbohydrate becomes saturated. After the carriers are saturated, the further intake of that same carbohydrate does not result in an increased assimilation at the intestinal level and consequently there is no increase in the oxidation rate. In 1994, a study by Adopo and collaborators demonstrated that the intake of a combination of glucose and fructose allows to reach a higher rate of carbohydrate oxidation than what can be achieved by taking glucose alone). The following year it was suggested that the intake of different carbohydrates (glucose, fructose and sucrose) can increase the absorption of carbohydrates by the body thanks to the different transport mechanisms through which the absorption of the carbohydrates themselves occurs at the intestinal level.

Fructose absorption has been demonstrated to be stimulated in the presence of glucose, and this may contribute to a faster intestinal absorption of carbohydrates when glucose and fructose are ingested simultaneously. A faster intestinal absorption of carbohydrates can lead to the increase in the availability of exogenous carbohydrates in the blood, and consequently increase the rate of carbohydrate oxidation observed when fructose and glucose are ingested simultaneously.

The limiting step in the oxidation of the carbohydrates taken with the diet is the intestinal absorption of the carbohydrates themselves, which limits the absorption of glucose by the SGLT1 transporter to about 1 g/min. If consumed in combination with fructose, carbohydrate that uses the different GLUT5 carrier, the rate of carbohydrate oxidation can exceed 1.5 g/min.

Therefore, if the intake of carbohydrates exceeds 60 g carbohydrates/hour, in order to make their assimilation possible, they must be "multiple transportable carbohydrates", that is, they must derive from assimilable sources through different carriers at the molecular level. And to reach an intake rate of 80-90 g/hour, the 2:1 ratio becomes decisive both in terms of assimilability and of gastric tolerance.

EP 2098 126 A1 discloses a carbohydrate-rich food bar, characterized by an energy density of 800-2200 kJ per 100 g.

Fisher S., "Free Powerbar blasts sample", (available at http://freebies.about.com/b/2010/02/21/free-powerbar-gel-blasts-sample.htm), discloses an energy bar, characterized by nutritional information provided in terms of caloric content.

US 2014/093609 A1 discloses a food composition in powder form, intended to be dissolved in water prior to use characterized by an energy density of 800-2200 kJ per 100 g.

CN 100 548 156 C discloses an energy composition in the form of a stick, characterized by an overall energy density of about 2.8-3.5 kcal/g.

It is therefore evident the need to have products with "multiple transportable carbohydrates" and a carbohydrate density suitable for providing 90 g carbohydrates/h and more to an advanced and trained athlete, i.e. that said products occupy little space (portability) and are consumable through a minimum number of chewing and ingestion acts, so that the sports performance is not conditioned by the practical aspects of eating.

### DEFINITIONS AND ABBREVIATIONS

CHO: carbohydrates

### SUMMARY OF THE INVENTION

The invention is defined by the claims.

The present invention solves the aforesaid problems by means of a bar characterized by a high carbohydrate density, expressed as grams of carbohydrates per cm³ of bar, preferably with a post hydrolysis glucose:fructose ratio of the sugars of 1.8-2.2 : 0.8-1.2, and a low protein and fat content.

In the present invention, when "post hydrolysis glucose:fructose ratio" is indicated, it is meant the final glucose:fructose ratio deriving from the digestion of the carbohydrates used in the bar of the invention.

The invention originates from having formulated a bar containing a high density of carbohydrates per unit of volume so as to provide the individual with high amounts of carbohydrates by taking a low-volume bar.

Advantageously, the inventors have identified and applied a specific unit of measurement, expressed as g carbohydrates/cm³, to bars intended for individuals who practice sport activity, suitable for expressing the nutritional/energy characteristics of the bar per unit of volume.

The bar of the invention is, for example, of the type used as a supplement by the individuals practising physical activity, typically walking and cycling.

Thanks to careful choices and to a unique combination of some technical aspects, the bar is particularly dense in carbohydrates compared to similar products on the market, thus making this matrix competitive towards other bars and even competitive with formats normally denser in carbohydrates such as gels and syrups. The specific choice of high carbohydrate density powder ingredients, the selection of the most appropriate production technology and the definition of the best format make it possible to obtain a small-sized bar, easy to chew and satisfactory for the athlete.

This formulation allows to minimize the volume (portability) of the food with a significant advantage in the format: a small bar with high carbohydrate content, compact and easy to carry in one's pocket.

The same high-density formulation also allows to maximize the amount of carbohydrates ingested with each single bite, since the volume capacity of a bite is in any case limited.

Given the cubing of a bite definable with a typical value for each subject, this results in a higher intake of carbohydrates per unit of time compared to similar products on the market.

The bar described herein has a high concentration of carbohydrates, to facilitate the usability and the transport during the sports activity. In fact, in just 45 g and about 34 cm³ it has the capacity of providing 30 g of carbohydrates, an ideal quantity to develop in 2-3 bites the nutritional strategy up to 90 g of carbohydrates/hour in a 2:1 ratio and beyond.

### DETAILED DESCRIPTION OF THE INVENTION

In accordance with an aspect it is provided a bar comprising carbohydrates with a post hydrolysis glucose:fructose ratio of 1.8-2.2 : 0.8-1.2, preferably 2:1 and low protein and fat content characterized by a carbohydrate density equal to 0.86-0.95, preferably 0.87-0.92 g/cm³.

Advantageously, the bar comprises carbohydrates with a post hydrolysis glucose:fructose ratio of 1.8-2.2 : 0.8-1.2 and low protein and fat content, a physical density of 1.30-1.35 g/cm³ and a carbohydrate content equal to 0.86-0.95, preferably 0.87-0.92 g/cm³.

Preferably, the bar according to any one of the embodiments described herein has a protein content of less than 4.6 g/100 g and a fat content of less than 5.1 g/100 g. According to some embodiments, the carbohydrates contained in the bar described herein have a post hydrolysis glucose:fructose ratio of 1.9-2.1 : 0.9-1.1.

Advantageously, in the bar described herein the high carbohydrate density, expressed as grams of carbohydrates / cm³ is obtained by using foods containing powdered carbohydrates.

Preferably such powders have a particle size comprised from 50 to 270 microns as measured by particle size analysis with sieving, for example as described below.

After careful evaluation of countless ingredients, as the main ingredients for the bar of the present invention high carbohydrate powders, such as sucrose and oatmeal, were specially chosen.

In the bar of the invention the sucrose is preferably contained in the amount 35-38%, more preferably 35.3-37.5%.

In the bar of the invention the oatmeal is preferably contained in the amount 20-23%, more preferably 20.6-22.2%.

Crunchy ingredients were therefore avoided, typically dried fruit granola, chopped fruit, puffed cereals, extruded cereals that would have made the matrix less compact. The bar of the present invention comprises "multiple transportable carbohydrates" preferably consisting of a mixture of glucose-fructose syrup, fructose syrup, polydextrose, glycerol, sucrose, oatmeal and oat flakes, glucose-fructose syrup, fructose syrup, polydextrose, glycerol constitute a liquid phase. Sucrose, oatmeal and oat flakes are part of the powder phase.

The powder ingredients preferably constitute 70-75% by weight of the bar, more preferably 73.5%. Of the powder phase the carbohydrate-based powder components (i.e. sucrose, oatmeal and oat flakes) are between 56 and 60%.

The powder phase preferably further comprises:
Extra-virgin olive oil powder supported on acacia fibre,
Vitamin B1, optionally
Flavourings, and/or
Fat cocoa, i.e. cocoa powder with 22% cocoa butter (in the version cocoa taste)

Such powders preferably have a particle size comprised between 50 and 270 microns.

Preferably the particle size of the powders is measured with the method described in example 4.

Preferably, the bar according to the present invention has the following composition in % by weight on the total:
LIQUID PHASE
   Glucose-fructose syrup: 10-15 %, more preferably 11.4-14.8%;
   Fructose syrup: 0.1-0.5%; more preferably 0.2-0.4 %;
   Polydextrose: 3-6%, more preferably 3.2-5.8%;
   Glycerol: 8-9%, more preferably 8.2-9.0%;
POWDER PHASE
   Sucrose: 35-38%, more preferably 35.3-37.5%;
   Oatmeal: 20-23%, more preferably 20.6-22.2%;
   Oat flakes: 5-7% more preferably 5.7-6.1%;
   Extra-virgin olive oil powder supported on acacia fibre: 5-8%;
   Vitamin B1: 15% NRV; and optionally
   Flavourings 0-0.74% and/or
   Fat cocoa 6.7% (for the cocoa taste of the bar)

The percentage amounts refer to the total weight of the bar.

The bar is in a compact and convenient format to carry around and to take at any times of the activity..

Advantageously, the bar of the invention has a density of 1.33 g/cm³ and in particular 0.88 of CHO/cm³.

45 g of the product thus formulated provide 30 g of carbohydrates, a simple value to manage to build nutritional strategies up to 90 g/h. 45 g of product correspond to a volume of about 34 cm³ which is ingestible, for example in 2-3 bites.

According to an aspect, the present invention concerns a process for producing the bar object of the present invention, said process comprising the following steps:
hot pre-mixing liquid ingredients to form a liquid phase;
mixing powder ingredients to form a powder phase;
adding the liquid phase to the powder phase and mixing until a cohesive and homogeneous mix is obtained
forming in the form of a bar. Preferably said forming step consists of the steps of loading the dough into a hopper;
   spreading of the dough from the hopper onto a conveyor belt;
   adjusting the height of the bar using a special roller;
   adjusting the length and width of the bar by cutting with a cutter.

Preferably, the process according to the invention ends with primary packaging, secondary packaging and palletizing.

According to a further aspect, the present invention concerns the use of the bar described above as an energy product during physical exertion, for the intake of carbohydrates during physical exertion.

The present invention can be better understood in the light of the following embodiment examples.

### EXPERIMENTAL PART

### EXAMPLE 1 - Composition of an energy bar according to the invention (Bar 2:1 ENERVIT SPORT)

### LIQUID PHASE

- Glucose-fructose syrup: 11.4-14.8%
- Fructose syrup: 0.2-0.4 %
- Polydextrose: 3.2-5.8%
- Glycerol: 8.2-9%

### POWDER PHASE

- Sucrose: 35.3-37.5%
- Oatmeal: 20.6-22.2%
- Oat flakes: 5.9%
- Extra-virgin olive oil powder supported on acacia fibre: 5-7.9%
- Vitamin B1: 15% NRV
- Flavourings
- Fat cocoa (only in the version "taste 1")

Wherein the % are by weight with respect to the total.

### EXAMPLE 2 - Process for producing the bars according to the invention

Energy bars according to the invention can be produced following the following process:
i. hot pre-mixing liquid ingredients to form the liquid phase
ii. mixing solid powder ingredients to form the powder phase
iii. adding the liquid phase to the powder phase and mixing until a cohesive and homogeneous mixture is obtained
iv. forming the bars by means of a compactor:
   a. loading the dough into the hopper and laying on the conveyor belt
   b. adjusting the height of the bars by means of a special roller
v. cutter for adjusting the length and width of the bars
vi. primary packaging, secondary packaging and palletizing

No. 20,000 45 g bars were formed from 900 kg of dough, having a length 8.3 cm, width 3.4 cm and thickness 1.2 cm. Each bar containing 30 g of carbohydrates.

### EXAMPLE 3- Carbohydrate density

The carbohydrate density of the product of the invention is expressed in "g carbohydrates/cm³" and not as grams of carbohydrates per 100 g of product as is more commonly the case.

Consider the limit case of cotton candy as an example to demonstrate the need for the new unit of measurement to express the performance of technical foods for sports people in the terms described above.

Cotton candy represents the product with the highest carbohydrate density per 100 g of food that can be imagined as it is almost exclusively made up of carbohydrates (100 g of carbohydrates over 100 g of product).

Let's compare it below with a series of products that are reported in descending order of carbohydrate density expressed as "g carbohydrates/100 g".

The comparison is made on the basis of the food dose corresponding to 90 g of carbohydrates, the amount of carbohydrates to be taken in one hour of exertion.

| **Food** | **g of food providing 90 grams of carbohydrates** |
|---|---|
| Sugar candy (100 g CHO/100 g) | 90 |
| E. SPORT BAR COMPETITION APRICOT (77 g CHO/100 g)⁽¹⁾ | 117 |
| MAURTEN SOLID 225 (74 g CHO/100 g)⁽²⁾ | 121 |
| POWER BAR ENERGIZE C2 MAX, BERRY (71 g CHO/100 g)⁽³⁾ | 126 |
| BORN FLAP JACK APPLE CRUMBLE 2-1 (68 g CHO/100 g)⁽⁴⁾ | 132 |
| E. SPORT BAR C2-1, taste 1 (66 g CHO/100 g) according to the invention | 136 |
| E. SPORT BAR C2-1, taste 2 (66 g CHO/100 g) according to the invention | 136 |

| | |
|---|---|
| ⁽¹⁾ Glucose and fructose syrup (39%) - Rice flakes (rice flour, corn flour, sugar, salt) (21%) - Oat flakes (gluten-free) (16%) - Maltodextrin - Raisins (5%) - Apricots (apricots, rice flour) (4.7%) - Cocoa butter - Flavouring - Isomaltulose (0.4%) ⁽²⁾ Fructose-Glucose Syrup, Gluten-Free Oat, Maltodextrins, Rice Flour, Sugar, Sunflower Oil, Glucose Syrup, Rice Bran, Salt, Emulsifier (Lecithin), Rice Extract ⁽³⁾ Glucose-Fructose Syrup, Fruit Preparation (sugar, fruit juice (Raspberry Concentrated Juice, Cherry Concentrate, Strawberry Juice Concentrate), Fructose Syrup, LACTOSE, Apple Puree, Raspberries(8%), Strawberries(5%), apples, gellants (pectin), palm fat, antioxidant (ascorbic acid), acidifiers (Citric Acid), flavourings (13.2%), maltodextrin, OAT FLAKES (11%), MILK PROTEINS, rice flakes (Rice Semolina, Sugar, WHEAT GLUTEN, palm fat, MALTED BARLEY FLOUR, salt), ALMOND GRAINS, Sodium Citrate, rapeseed oil, Beet Root Juice Concentrate, acidifiers (Citric Acid), Magnesium Carbonate, flavourings, salt ⁽⁴⁾ OAT flakes (35.7%) (GLUTEN), glucose syrup, fructose powder, deodorised cocoa butter, sultana raisins, maltodextrins, puffed rice [rice flour, OAT and WHEAT flour (GLUTEN), BARLEY malt extract (GLUTEN), sugar, WHEY powder, salt, dextrose], sea salt, flavouring, emulsifier: lecithins (SOY) | |

If the comparison is made on the basis of the grams of carbohydrates per 100 g of food, it turns out that the intake of cotton candy is the most efficient way to ingest the necessary dose of 90 grams of carbohydrates. It is evident that cotton candy is actually the least practical food to carry around because of the density of only 0.1 grams per cm³ (note that in this case we refer to the grams of food in total, to the generic physical density, not to the carbohydrate density), in fact in order to consume 90 grams of carbohydrates one needs to carry along no less than 900 cm³ of cotton candy, the worst portability in the considered range of foods.

Therefore, it is clear that it is more appropriate to use the criterion of physical density (g/cm³) or, better still, to refer to the carbohydrate density (g CHO/cm³ of food) rather than that of the (chemical) carbohydrate density (g CHO/100 g of food).

| **FOOD** | **Density (g/cm3)** | **Volume of food providing 90 g CHO (cm³)** | **g CHO/cm³** |
|---|---|---|---|
| E. SPORT BAR C2-1, taste 1 according to the invention | 1.33 | 102.3 | 0.88 |
| E. SPORT BAR C2-1, taste 2 according to the invention | 1.33 | 102.3 | 0.88 |
| POWER BAR ENERGIZE C2 MAX, BERRY | 1.18 | 107.1 | 0.84 |
| MAURTEN SOLID 225 | 0.97 | 125.0 | 0.72 |
| E. SPORT BAR COMPETITION APRICOT | 0.90 | 130.4 | 0.69 |
| BORN FLAPJACKAPPLE CRUMBLE 2-1 | 0.98 | 134.3 | 0.67 |
| Cotton candy | 0.1 | 900.0 | 0.10 |

It is also evident that the volume of food necessary to take and carry along the characteristic dose of 90 grams of carbohydrates is the smallest of the range examined for the food object of the present invention.

### EXAMPLE 4

### Determination of the particle size of powder and granulated products described herein

### 1. Principle

The particle size distribution is determined using a series of calibrated sieves, through which the product is passed. The particle size distribution is given by the percentages of product that remain on the individual sieves.

The sample is taken after final mixing and stored in a bag at room temperature.

### 2.1 Material and reagents

- Fritsch AnaLysette 3PRO - LAB 27 (99)
- Sieve
- Precision scale LAB406(11)
- Excel file (protected folder - Shared (\\ze-srv004)

### 2.2 Operating mode

Set the scale for self-calibration.

Check on the control plan the sieves in use for the product to be analysed.

Once the scale indicates zero, arrange the sieves by increasing size on it, starting from the base up to the sieve with larger mesh size.

Set, by clicking on the scale →T←, the tare and add about 100 g of the granulate. Move the column of sieves on the screening machine and operate the sieving system with the parameters set (5 minutes with 2.0 amplit).

When finished, transfer individually the sieves onto the zeroed scale and transcribe the weight detected on the display in the preset excel file, reporting the tare of the sieves and the limits as per Technical Specification.

To detect the particle size data produced, look at the last column of the window of the sieves.

## Claims

1. A bar comprising carbohydrates with a post hydrolysis glucose:fructose ratio of 1.8-2.2 : 0.8-1.2, preferably 2:1 and low protein and fat content, said bar being **characterized by** a carbohydrate content equal to 0.86-0.95 g/cm³, preferably 0.87-0.92 g/cm³.

2. The bar according to claim 1, having a density of 1.30-1.35 g/cm³.

3. The bar according to claim 1 or 2, comprising as main ingredients sucrose and oatmeal.

4. The bar according to any one of claims 1-3, comprising "multiple transportable carbohydrates" based on a mixture of glucose-fructose syrup, fructose syrup, polydextrose, glycerol, sucrose, oatmeal and oat flakes.

5. The bar according to claim 4, wherein glucose-fructose syrup, fructose syrup, polydextrose, glycerol constitutes a liquid phase; and sucrose, oatmeal and oat flakes are part of a powder phase.

6. The bar according to any one of claims 1-5, wherein the powder ingredients constitute 70-75% by weight of the composition of which the carbohydrate-based powder components are between 56 and 60%.

7. The bar according to any one of claims 1-6, comprising in the powder phase Extra-virgin olive oil powder supported on acacia fibre, and/or Vitamin B1, and/or Flavourings, and/or optionally based on the version taste Fat cocoa.

8. Use of the bar according to any one of claims 1-7 as an energy product during physical exertion.

9. A process for producing the bar according to any one of claims 1-7, said process comprising the following steps:
hot pre-mixing liquid ingredients to form a liquid phase;
mixing powder ingredients to form a powder phase;
adding the liquid phase to the powder phase and mixing until a cohesive and homogeneous mix is obtained;
forming into the form of a bar

10. The process according to claim 9, wherein said forming step consists of the steps of:
loading the dough into a hopper;
spreading of the dough from the hopper onto a conveyor belt;
adjusting the height of the bar using a special roller;
adjusting the length and width of the bar by cutting with a cutter.

## Patentansprüche

1. Riegel, der Kohlenhydrate mit einem Glucose-Fructose-Verhältnis nach Hydrolyse von 1,8-2,2 : 0,8-1,2, vorzugsweise 2 : 1, und einen geringen Protein- und Fettgehalt umfasst, wobei der Riegel durch einen Kohlenhydratgehalt von 0,86-0,95 g/cm³, vorzugsweise 0,87-0,92 g/cm³, gekennzeichnet ist.

2. Riegel nach Anspruch 1, der eine Dichte von 1,30-1,35 g/cm³ aufweist.

3. Riegel nach Anspruch 1 oder 2, der als Hauptbestandteile Saccharose und Hafermehl umfasst.

4. Riegel nach einem der Ansprüche 1-3, der "mehrfach transportierbare Kohlenhydrate" auf Basis einer Mischung aus Glucose-Fructose-Sirup, Fructose-Sirup, Polydextrose, Glycerin, Saccharose, Hafermehl und Haferflocken umfasst.

5. Riegel nach Anspruch 4, wobei Glucose-Fructose-Sirup, Fructose-Sirup, Polydextrose, Glycerin eine flüssige Phase bilden; und Saccharose, Hafermehl und Haferflocken Teil einer Pulverphase sind.

6. Riegel nach einem der Ansprüche 1-5, wobei die Pulverbestandteile 70-75 Gew.-% der Zusammensetzung ausmachen, wovon die Pulverkomponenten auf Kohlenhydratbasis zwischen 56 und 60% liegen.

7. Riegel nach einem der Ansprüche 1-6, der in der Pulverphase Extra-Vergine-Olivenölpulver auf Akazienfaser als Träger und/oder Vitamin B1 und/oder Aromen und/oder optional je nach Geschmacksrichtung Fettkakao umfasst.

8. Verwendung des Riegels nach einem der Ansprüche 1-7 als Energieprodukt während körperlicher Anstrengung.

9. Verfahren zur Herstellung des Riegels nach einem der Ansprüche 1-7, wobei das Verfahren die folgenden Schritte umfasst:
heißes Vormischen flüssiger Bestandteile zur Bildung einer flüssigen Phase;
Mischen von Pulverbestandteilen zur Bildung einer Pulverphase;
Zugeben der flüssigen Phase zu der Pulverphase und Mischen, bis eine kohäsive und homogene Mischung erhalten wird;
Formen in die Form eines Riegels.

10. Verfahren nach Anspruch 9, wobei der Formschritt aus den Schritten besteht:
Füllen des Teigs in einen Trichter;
Verteilen des Teigs aus dem Trichter auf ein Förderband;
Anpassen der Höhe des Riegels unter Verwendung einer speziellen Walze;
Anpassen der Länge und Breite des Riegels durch Schneiden mit einer Schneidvorrichtung.

## Revendications

1. Barre comprenant des glucides avec un rapport glucose-fructose après hydrolyse de 1,8-2,2 : 0,8-1,2, de préférence 2:1 et une faible teneur en protéines et en matières grasses, ladite barre étant **caractérisée par** une teneur en glucides égale à 0,86-0,95 g/cm³, de préférence 0,87- 0,92 g/cm³.

2. Barre selon la revendication 1, ayant une densité de 1,30-1,35 g/cm³.

3. Barre selon la revendication 1 ou 2, comprenant comme ingrédients principaux du saccharose et de la farine d'avoine.

4. Barre selon l'une quelconque des revendications 1 à 3, comprenant « de multiples glucides transportables » à base d'un mélange de sirop de glucose-fructose, de sirop de fructose, de polydextrose, de glycérol, de saccharose, de farine d'avoine et de flocons d'avoine.

5. Barre selon la revendication 4, dans laquelle le sirop de glucose-fructose, le sirop de fructose, le polydextrose, le glycérol constituent une phase liquide ; et le saccharose, la farine d'avoine et les flocons d'avoine font partie d'une phase pulvérulente.

6. Barre selon l'une quelconque des revendications 1 à 5, dans laquelle les ingrédients en poudre constituent 70 à 75 % en poids de la composition dont les composants en poudre à base d'hydrates de carbone sont compris entre 56 et 60 %.

7. Barre selon l'une quelconque des revendications 1 à 6, comprenant dans la phase pulvérulente de l'huile d'olive extra-vierge en poudre supportée sur de la fibre d'acacia, et/ou de la vitamine B1, et/ou des arômes, et/ou éventuellement, selon la version de goût, de la graisse de cacao.

8. Utilisation de la barre selon l'une quelconque des revendications 1 à 7 comme produit énergétique lors d'un effort physique.

9. Procédé de production de la barre selon l'une quelconque des revendications 1 à 7, ledit procédé comprenant les étapes suivantes :
prémélange à chaud des ingrédients liquides pour former une phase liquide ;
mélange des ingrédients en poudre pour former une phase pulvérulente ;
ajout de la phase liquide à la phase pulvérulente et mélange pour obtenir un mélange cohésif et homogène ;
moulage de la barre.

10. Procédé selon la revendication 9, dans lequel ladite étape de moulage comprend les étapes consistant à :
charger la pâte dans une trémie ;
étaler la pâte depuis la trémie sur une bande transporteuse ;
régler la hauteur de la barre à l'aide d'un rouleau approprié ;
régler la longueur et la largeur de la barre par découpe avec un outil de coupe.
